Europäisches Patentamt

European Patent Office

Office européen des brevets

(19)

(11) **EP 0 938 926 B1**

(12) **FASCICULE DE BREVET EUROPEEN**

(45) Date de publication et mention
de la délivrance du brevet:
**13.08.2003 Bulletin 2003/33**

(51) Int Cl.7: **B01J 29/06**, C10G 47/20

(21) Numéro de dépôt: **99400448.9**

(22) Date de dépôt: **24.02.1999**

(54) **Catalyseur comprenant une zéolithe choise dans le groupe formé par les zéolithes NU-85, NU-86 et NU-87 et son utilisation en hydroconversion de charges pétrolières hydrocarbonées**

Katalysator haltende ein Zeolith aus der Gruppe NU-85,NU-86 und NU-87 und seine Verwendung für die Hydroumwandlung von Kohlenwasserstoffeneinsätzen

Catalyst containing one of the zeolites of the group formed by NU-85,NU-86 and NU-87 and its use for the hydroconversion of hydrocarbon feedstocks

(84) Etats contractants désignés:
**DE ES GB GR IT NL**

(30) Priorité: **26.02.1998 FR 9802313**
**27.02.1998 FR 9802441**

(43) Date de publication de la demande:
**01.09.1999 Bulletin 1999/35**

(73) Titulaire: **Institut Francais du Petrole**
**92852 Rueil-Malmaison Cedex (FR)**

(72) Inventeurs:
• **Benazzi, Eric**
**78400 Chatou (FR)**
• **George-Marchal, Nathalie**
**69230 Saint Genis Laval (FR)**
• **Kasztelan, Slavik**
**92500 Rueil Malmaison (FR)**

(56) Documents cités:
**EP-A- 0 377 291**     **EP-A- 0 378 916**
**EP-A- 0 462 745**     **EP-A- 0 463 768**
**EP-A- 0 600 483**     **US-A- 4 427 786**
**US-A- 4 613 720**     **US-A- 5 254 787**

**Description**

La présente invention concerne un catalyseur d'hydrocraquage de charges hydrocarbonées, ledit catalyseur comprenant au moins un métal choisi dans le groupe formé par les métaux du groupe VIB et du groupe VIII (groupe 6 et/ou les groupes 8, 9 et 10 selon la nouvelle notation de la classification périodique des éléments : Handbook of Chemistry and Physics, 76ième édition, 1995-1996), associés à un support comprenant une matrice amorphe ou mal cristallisée de type oxyde et une zéolithe choisie dans l'ensemble formé par les zéolithes NU-85, NU-86 et NU-87. La matrice du catalyseur renferme à titre de promoteur au moins un élément choisi parmi le bore et le silicium, et éventuellement du phosphore, et éventuellement au moins un élément du groupe VIIA (groupe 17 des halogènes) et notamment le fluor, et éventuellement au moins un élément du groupe VIIB.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certain procédé d'hydrocraquage permettent d'obtenir également un résidu fortement purifié pouvant constituer d'excellente bases pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont généralement du type bifonctionnels associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les silice-alumines amorphes et les zéolithes.

La fonction hydrogénante est apportée soit par un ou plusieurs métaux du groupe VIII de la classification périodique des éléments, tels que fer, cobalt, nickel, ruthénium, rhodium, palladium, osmium, iridium et platine, de préférence le cobalt, le nickel et le fer, soit par une association d'au moins un métal du groupe VI de la classification périodique tels que molybdène, tungstène, chrome et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à une température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant par exemple de la zéolithe Y de type structural FAU, ou les catalyseurs comportant par exemple une zéolithe de type bêta présentent quant à eux une activité catalytique supérieure à celle des silice-alumines amorphes, mais présentent des sélectivités en produits légers qui sont plus élevées.

Le catalyseur selon EP 0 863 198 A contient au moins 5 % pds d'au moins un élément hydro-déshydrogénant choisi dans le groupe formé par les métaux non nobles du GVIII, les métaux de GVIB, et le niobium, et le catalyseur contient de préférence du phosphore.

De préférence, le tamis est une zéolithe NU-10, NU-23, NU-87, EU-13, ou Theta-1.

Selon WO97/09 397, le tamis est une zéolithe NU-10, NU-23, NU-87, EU-13, ou Theta-1.

D'autre part le catalyseur comporte au moins une fonction hydro-déshydrogénante, par exemple un métal du groupe VIII et/ou un métal du groupe VI B, et/ou le rhénium et/ou le niobium,

Les travaux de recherche effectués par le demandeur sur de nombreuses zéolithes et solides microporeux cristallisés l'ont conduit à découvrir que, de façon surprenante, un catalyseur contenant une zéolithe choisie dans le groupe formé par les zéolithes NU-85, NU-86 et NU-87, au moins un métal choisi dans le groupe formé par les métaux du groupe VIB et du groupe VIII de la classification périodique, au moins un élément choisi parmi le bore et le silicium, éventuellement du phosphore, éventuellement au moins un élément du groupe VIIA, éventuellement au moins un élément du groupe VIIB, permet d'obtenir des activités, c'est à dire un niveau de conversion plus élevé, que les catalyseurs connus dans l'art antérieur.

La fonction hydrogénante est choisie parmi les métaux du groupe VIII tels que le fer, le cobalt, le nickel, le ruthénium, le rhodium, le palladium, l'osmium, l'iridium et la platine et parmi les métaux du groupe VIB tels que le molybdène, le tungstène et le chrome.

L'élément éventuel du groupe VIIA est choisi parmi le fluor, le chlore, le brome et l'iode, de préférence le fluor et le chlore. L'élément du groupe VIIB est choisi parmi le manganèse et le rhénium.

Plus précisément, l'invention a pour objet une composition comprenant au moins une matrice et une zéolithe choisie dans l'ensemble formé par les zéolithes NU-85, NU-86 et NU-87.

La zéolithe NU-85 utilisée dans ce brevet est décrite dans le brevet EP-A2-462745, brevet qui est donc incorporé par cette seule mention à la présente description.

Les zéolithes NU-85 qui entrent dans la composition selon l'invention sont utilisées avec les teneurs en silicium et aluminium obtenues à la synthèse.

La zéolithe NU-86, sous forme hydrogène ou partiellement sous forme hydrogène, désignée par H-NU-86 et obtenue par calcination et/ou échanges ioniques de la zéolithe NU-86 brute de synthèse, employée dans le procédé selon l'invention ainsi que le mode de synthèse de ladite brute de synthèse, sont décrits dans le brevet EP-0463768 A2.

Le type structural de cette zéolithe n'a pas encore été officiellement attribué par la commission de synthèse de l'IZA (International Zeolite Association). Cependant, suite aux travaux publiés au 9ieme Congrès International sur les Zéolithes par J.L. Casci, P.A. Box et M.D. Shannon ("Proceedings of the 9th International Zeolite Conference, Montreal 1992, Eds R. Von Ballmoos et al., 1993 by Butterworth) il apparaît que :

- la zéolithe NU-86 possède un système microporeux tridimensionnel;
- ce système microporeux tridimensionnel est constitué de canaux droits dont l'ouverture de pore est délimitée par 11 atomes T (atomes tétraédriques : Si, Al, Ga, Fe..), de canaux droits délimités alternativement par des ouvertures à 10 et 12 atomes T et des canaux sinusoïdaux aussi délimités de façon alternative par des ouvertures à 10 et 12 atomes T.

On entend par le terme ouverture de pores à 10, 11 ou 12 atomes tétraédriques (T) des pores constitués de 10, 11 ou 12 côtés.

La zéolithe NU-86 utilisée dans la composition selon l'invention est au moins en partie, de préférence pratiquement totalement, sous forme acide, c'est-à-dire sous forme hydrogène (H+). Le rapport atomique Na/T est généralement inférieur à 90% et de préférence inférieur à 50% et de manière encore plus préférée inférieur à 10%.

En ce qui concerne la zéolithe NU-87 de type structural NES aussi utilisée dans la présente invention, elle est décrite dans le brevet EP-A1-377291 ainsi que dans le document "Atlas of Zeolite Structure Types", de W.M. Meier, D.H. Oison and Ch. Baerlocher, Fourth revised edition 1996, Elsevier.

On emploiera de préférence les zéolithes NU-85, NU-86 et NU-87 au moins en partie sous forme acide (et de préférence en totalité sous forme H) ou partiellement échangée avec des cations métalliques, par exemple des cations des métaux alcalino-terreux.

Les zéolithes NU-85, NU-86 et NU-87 qui entrent dans la composition selon l'invention sont utilisées avec les teneurs en silicium et aluminium obtenues à la synthèse.

Le catalyseur de la présente invention renferme donc également au moins une matrice minérale poreuse amorphe ou mal cristallisée de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

Le catalyseur est aussi caractérisé en ce qu'il renferme au moins un élément choisi parmi le bore et le silicium et éventuellement, du phosphore, éventuellement au moins un élément du groupe VIIA, de préférence le fluor, et encore éventuellement au moins un élément du groupe VIIB. Le catalyseur renferme en outre une fonction hydrogénante. La fonction hydrogénante telle qu'elle a été définie précédemment, c'est à dire au moins un métal choisi dans le groupe formé par les métaux du groupe VIB et du groupe VIII.

Le catalyseur de la présente invention renferme généralement en % poids par rapport à la masse totale du catalyseur au moins un métal choisi dans les groupes suivants et avec les teneurs suivantes :

- 0,1 à 60%, de préférence de 0,1 à 50% et de manière encore plus préférée de 0,1 à 40% d'au moins un métal choisi dans le groupe formé par les métaux du groupe VIB et du groupe VIII,

- le catalyseur renferme en outre au moins une matrice minérale poreuse amorphe ou mal cristallisée de type oxyde, dont la teneur pondérale par rapport à l'ensemble du catalyseur varie de 0,1 à 99%, de préférence de 1 à 99 %,
- le catalyseur renferme en outre de 0,1 à 90%, de préférence de 0,1 à 80% et de manière encore plus préférée de 0,1 à 70% d'une zéolithe choisie dans le groupe formé par les zéolithes NU-85, NU-86 et NU-87, le dit catalyseur étant caractérisé en ce qu'il renferme de
- 0,1 à 20%, de préférence de 0,1 à 15% et de manière encore plus préférée de 0,1 à 10% d'au moins un élément promoteur choisi parmi le bore et le silicium, et éventuellement,
- 0 à 20%, de préférence de 0 à 15% et de manière encore plus préférée de 0,1 à 10% de phosphore, et éventuellement encore,
- 0 à 20%, de préférence de 0,1 à 15% et de manière encore plus préférée de 0,1 à 10% d'au moins un élément choisi dans le groupe VIIA, de préférence le fluor. et éventuellement encore,
- 0 à 20%, de préférence de 0,1 à 15% et de manière encore plus préférée de 0,1 à 10% d'au moins un élément choisi dans le groupe VIIB.

Les métaux du groupe VIB, du groupe VIII et du groupe VIIB du catalyseur de la présente invention peuvent être présent en totalité ou partiellement sous la forme métallique et/ou oxyde et/ou sulfure.

Les catalyseurs selon l'invention peuvent être préparés par toutes méthodes adéquates. D'une façon préférée, au moins un élément choisi parmi le silicium et le bore est introduit sur un support contenant déjà une zéolithe choisie dans le groupe formé par les zéolithes NU-85, NU-86 et NU-87, au moins une matrice, comme définie ci-avant, et le ou les métaux des groupes VIB et/ou au moins un élément du groupe VIII et éventuellement le phosphore. D'une façon préférée, le support est imprégné par au moins une solution aqueuse d'au moins un élément choisi parmi le bore et le silicium.

Lorsque le catalyseur en contient, le silicium introduit sur le support selon l'invention, est principalement localisé sur la matrice du support et peut être caractérisé par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces analyses locales vont fournir la localisation des divers éléments, en particulier la localisation de la silice amorphe sur la matrice du support due à l'introduction du silicium selon l'invention. La localisation du silicium de la charpente de la zéolithe contenue dans le support est aussi révélée. Par ailleurs, une estimation quantitative des teneurs locales en silicium et autres éléments peut-être effectuée.

D'autre part, la RMN du solide du $^{29}$Si à rotation à l'angle magique est une technique qui permet de détecter la présence de silice amorphe introduite dans le catalyseur selon le mode opératoire décrit dans la présente invention.

De façon plus particulière, le procédé de préparation du catalyseur de la présente invention comprend les étapes suivantes :

a) on sèche et on pèse un solide ci-après dénommé le précurseur, renfermant au moins les composés suivants : au moins une matrice, une zéolithe choisie dans le groupe formé par les zéolithes NU-85, NU-86 et NU-87, au moins un élément choisi dans le groupe formé par les métaux du groupe VIB et du groupe VIII, le tout étant de préférence mis en forme,

b) on imprègne le solide précurseur défini à l'étape a), par au moins une solution aqueuse contenant au moins un élément choisi parmi le bore et le silicium, éventuellement du phosphore et éventuellement au moins un élément du groupe VIIA, de préférence le fluor (F), et éventuellement au moins un élément du groupe VIIB,

c) on laisse reposer le solide humide sous une atmosphère humide à une température comprise entre 10 et 80°C,

d) on sèche le solide humide obtenu à l'étape b) à une température comprise entre 60 et 150°C,

e) on calcine le solide obtenu à l'étape c) à une température comprise entre 150 et 800°C.

L'étape b) ci-dessus peut être réalisée selon les méthodes classiques de l'homme du métier.

Dans un mode de réalisation de l'invention dans lequel le catalyseur contient du bore, une méthode préférée consiste à préparer une solution aqueuse d'au moins un sel de bore tel que le biborate d'ammonium ou le pentaborate d'ammonium en milieu alcalin et en présence d'eau oxygénée et à procéder à une imprégnation dite à sec, dans laquelle on rempli le volume des pores du précurseur par la solution contenant le bore. Dans le cas où l'on dépose du Si on utilisera une solution d'un composé du silicium de type silicone.

Dans un autre mode de réalisation de l'invention dans lequel le catalyseur contient du bore et du silicium, le dépôt de bore et de silicium peut se faire de manière simultanée en utilisant une solution contenant un sel de bore et un composé du silicium de type silicone. Ainsi, par exemple dans le cas où par exemple le précurseur est un catalyseur de type nickel-molybdène supporté sur alumine, il est possible d'imprégner ce précurseur par de la solution aqueuse de biborate d'ammonium et de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

L'élément choisi parmi le bore et le silicium, éventuellement le phosphore, éventuellement au moins un élément choisi dans le groupe VIIA des ions halogénures, de préférence F, éventuellement au moins un élément choisi dans le groupe VIIB peuvent être introduits dans le catalyseur à divers niveaux de la préparation et de diverses manières, par exemple par une ou plusieurs opérations d'imprégnation avec excès de solution sur le précurseur calciné

L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Ainsi, par exemple, il est possible d'imprégner le précurseur par une solution aqueuse de biborate d'ammonium ou de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mise en oeuvre pour obtenir le catalyseur de la présente invention.

Il est par exemple possible d'imprégner le précurseur avec une solution contenant du phosphore, de sécher, de calciner puis d'imprégner le solide obtenu avec la solution contenant le bore, de sécher, de calciner. Il est aussi possible d'imprégner le précurseur avec une solution contenant du phosphore, de sécher, de calciner puis d'imprégner le solide obtenu avec la solution contenant le silicium, de sécher, et de procéder à une calcination finale.

L'imprégnation éventuelle d'au moins un élément du groupe VIIB, par exemple le molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

Dans le cas où les métaux sont introduits en plusieurs imprégnations des sels précurseurs correspondants, une étape de séchage intermédiaire du catalyseur est généralement effectuée à une température généralement comprise entre 60 et 250°C.

Dans le cas où les éléments sont introduits en plusieurs imprégnations des sels précurseurs correspondants, une étape de calcination intermédiaire du catalyseur devra être effectuée à une température comprise entre 250 et 600 °C.

Le précurseur défini à l'étape a) ci dessus qui rentre dans la composition du catalyseur selon l'invention renferme au moins les composés suivants, au moins une matrice, une zéolithe choisie dans le groupe formé par les zéolithes NU-85, NU-86 et NU-87, au moins un élément du groupe VIB, et éventuellement au moins un élément du groupe VIII, éventuellement du bore ou du silicium, éventuellement du phosphore, le tout étant de préférence mis en forme

Ce précurseur peut être préparé par toutes les méthodes bien connues de l'homme du métier. Avantageusement, il est obtenu par mélange de la matrice et des zéolithes puis mise en forme. L'élément hydrogénant est introduit lors du mélange, ou encore après mise en forme (préféré). La mise en forme est suivie d'une calcination, l'élément hydrogénant est introduit avant ou après cette calcination. La préparation se termine dans tous les cas par une calcination à une température de 250 à 600°C. Une des méthodes préférées dans la présente invention consiste à malaxer au moins une zéolithe choisie dans l'ensemble formé par les zéolithes NU-85, NU-86 et NU-87, dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante peut être introduite en partie seulement (cas, par exemple, des associations d'oxydes de métaux des groupes VIB et VIII) ou en totalité au moment du malaxage de la zéolithe, c'est à dire au moins une zéolithe choisie dans l'ensemble formé par les zéolithes NU-85, NU-86 et NU-87, avec le gel d'oxyde choisi comme matrice. Elle peut être introduite par une ou plusieurs opérations d'échange ionique sur le support calciné constitué d'au moins une zéolithe choisie dans l'ensemble formé par les zéolithes NU-85, NU-86 et NU-87, dispersée dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin être introduite par une ou plusieurs opérations d'imprégnation du support calciné constitué d'au moins une zéolithe choisie dans le groupe formé par les zéolithes NU-85, NU-86 et NU-87 et de la matrice, par des solutions contenant les précurseurs des oxydes de métaux des groupes VI et/ou VIII, les précurseurs des oxydes de métaux de groupe VIII étant de préférence introduits après ceux du groupe VI ou en même temps que ces derniers.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Le catalyseur de la présente invention peut renfermer un élément du groupe VIII tel que fer, cobalt, nickel, ruthénium, rhodium, palladium, osmium, iridium ou platine. Parmi les métaux du groupe VIII on préfère employer les métaux non nobles fer, cobalt, nickel. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène. Il est également possible d'utiliser des associations de trois métaux par exemple nickel-cobalt-molybdène.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

De nombreuses sources de silicium peuvent être employées. Ainsi, on peut utiliser l'orthosilicate d'éthyle Si$(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique H3BO3, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium SiF4 ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIIB qui peuvent être utilisées sont bien connues de l'homme du métier. On utilise de préférence les sels d'ammonium, les nitrates et les chlorures.

Les catalyseurs ainsi obtenus, sous forme oxydes, peuvent éventuellement être amenés au moins en partie sous forme métallique ou sulfure.

Les catalyseurs obtenus par la présente invention sont mise en forme sous la forme de grains de différentes forme et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m$^2$/g, un volume poreux mesuré par porosimétrie au mercure compris entre 0,2 et 1,5 cm$^3$/g et une distribution en taille de pores pouvant être monomodale, bimodale ou polymodale.

Les catalyseurs obtenus par la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargée en soufre et azote.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C et de préférence à 300°C, généralement d'au plus 480°C, et souvent comprise entre 350°C et 450°C. La pression est en général supérieure à 2MPa et de préférence 3Mpa et d'au plus 12 Mpa, de préférence d'au plus 10MPa . La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 10h$^{-1}$. Dans ces conditions, les catalyseurs de la présente invention présentent une meilleure activité en conversion, en hydrodésulfuration et en hydrodéazotation que les catalyseurs de l'art antérieur.

Dans un second mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape.

Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison, choisi parmi les métaux du groupe VIII et du groupe VIB, tels que le nickel, le cobalt, le molybdène et le tungstène notamment. En outre, ce catalyseur peut contenir éventuellement du phosphore et éventuellement du bore.

La première étape se déroule généralement à une température de 350-460°C, de préférence 360-450°C, une pression totale d'au moins 2MPa, et de préférence 3 MPa, une vitesse volumique horaire de 0,1-5h$^{-1}$ et de préférence 0.2-2h$^{-1}$ et avec une quantité d'hydrogène d'au moins 100NI/NI de charge, et de préférence 260-3000NI/NI de charge.

Pour l'étape de conversion avec le catalyseur selon l'invention (ou seconde étape), les températures sont en général supérieures ou égales à 230°C et souvent comprises entre 300°C et 480°C et de préférence entre 330 et 450°C. La pression est en général d'au moins 2MPa et de préférence 3Mpa d'au plus 12 Mpa, de préférence d'au plus 10 MPa. La quantité d'hydrogène est au minimum de 100I/l de charge et souvent comprise entre 200 et 3000I/l d'hydrogène par litre de charge. La vitesse volumique horaire est comprise en général entre 0,15 et 10h$^{-1}$. Dans ces conditions, les catalyseurs de la présente invention présentent une meilleure activité en conversion, en hydrodésulfuration, en hydrodéazotation et une meilleure sélectivité en distillats moyens que les catalyseurs de l'art antérieur. La durée de vie des catalyseurs est également améliorée dans la plage de pression modérée.

Dans un autre mode de réalisation, le catalyseur de la présente invention peut être employé pour l'hydrocraquage dans des conditions de pression d'hydrogène élevées d'au moins 5 MPa. Les coupes traitées sont par exemple de type distillats sous vide fortement chargée en soufre et azote qui ont été préalablement hydrotraitées. Dans ce mode d'hydrocraquage le niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison, choisi parmi les métaux du groupe VIII et du groupe VIB, tels le nickel, le cobalt, le molybdène et le tungstène notamment. En outre, ce catalyseur peut contenir éventuellement du phosphore et éventuellement du bore.

La première étape se déroule généralement à une température de 350-460°C, de préférence 360-450°C, une pression supérieure à 3MPa, une vitesse volumique horaire de 0.1-5h$^{-1}$ et de préférence 0.2-2h$^{-1}$ et avec une quantité d'hydrogène d'au moins 100Nl/Nl de charge, et de préférence 260-3000Nl/Nl de charge.

Pour l'étape de conversion avec le catalyseur selon l'invention (ou seconde étape), les températures sont en général supérieures ou égales à 230°C et souvent comprises entre 300°C et 480°C et de préférence entre 300 et 440°C. La pression est en général supérieure à 5MPa et de préférence supérieure à 7 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$.

Dans ces conditions, les catalyseurs de la présente invention présentent une meilleure activité en conversion et une meilleure sélectivité en distillats moyens que les catalyseurs de l'art antérieur, même pour des teneurs en zéolithe considérablement plus faibles que celles des catalyseurs de l'art antérieur.

Les exemples suivants illustrent la présente invention sans toutefois en limiter la portée.

### Exemple 1 : Préparation d'un support de catalyseur d'hydrocraquage contenant une zéolithe NU-85

Un support de catalyseur d'hydrocraquage contenant une zéolithe NU-85 a été fabriqué en grande quantité de façon à pouvoir préparer différents catalyseurs à base du même support. La matière première utilisée est une zéolithe NU-85, qui est préparée selon l'exemple 4 du brevet EP 462.745 A2 et possède un rapport Si/Al atomique global égal à 13,1 et un rapport atomique Na/Al égal 0,23.

Cette zéolithe NU-85 subit tout d'abord une calcination dite sèche à 550°C sous flux d'air sec durant 20 heures. Puis le solide obtenu est soumis à quatre échanges ioniques dans une solution de $NH_4NO_3$ 10N, à environ 100°C pendant 4 heures pour chaque échange. Le solide ainsi obtenu est référencé $NH_4$-NU-85/1 et possède un rapport Si/Al = 13,8 et un rapport Na/Al = 0,005. Ses autres caractéristiques physico-chimiques sont regroupées dans le tableau 1.

Tableau 1

| Echantillon | Adsorption | |
|---|---|---|
| | $S_{BET}$ (m$^2$/g) | V(P/P$_O$ = 0,19) ml N$_2$ liquide/g |
| $NH_4$-NU-85/1 | 436 | 0,18 |

18,6 grammes de zéolithe H-NU-85, préparée précédemment sont dans un premier temps mélangées puis malaxées avec 81,4 grammes d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés et calcinés à 500° C pendant 2 heures sous air sec.

### Exemple 2: Préparation de catalyseurs d'hydrocraquage contenant une zéolithe NU-85

Les extrudés de support préparés dans l'exemple 1 sont imprégnés à sec par une solution d'un mélange d'heptamolybdate d'ammonium et de nitrate de nickel, et enfin calcinés sous air à 550 °C in-situ dans le réacteur.

Les extrudés de support de l'exemple 1 sont imprégnés à sec par une solution d'un mélange d'heptamolybdate d'ammonium, de nitrate de nickel et d'acide orthophosphorique, et enfin calcinés sous air à 550 °C in-situ dans le réacteur.

Nous avons imprégné l'échantillon de catalyseur NU85NiMo décrit ci-dessus par une solution aqueuse renfermant du biborate d'ammonium de manière à déposer environ 1,8 % de $B_2O_3$. Après maturation à température ambiante dans une atmosphère saturée en eau les extrudés imprégnés sont séchés pendant une nuit à 120°C puis calcinés à 550°C pendant 2 heures sous air sec. On obtient un catalyseur nommé NU85NiMoPB. Un catalyseur NU85NiMoPSi a été obtenu par la même procédure que le catalyseur NU85NiMoPB ci-dessus mais en remplaçant dans la solution d'imprégnation le précurseur de bore par l'émulsion de silicone Rhodorsil EP1 de manière à déposer environ 1,6 % de $SiO_2$. Enfin, un catalyseur NU85NiMoPBSi a été obtenu par la même procédure que les catalyseurs ci-dessus mais en utilisant une solution aqueuse renfermant le biborate d'ammonium et l'émulsion de silicone Rhodorsil EP1 de manière à déposer environ 1,8 de $B_2O_3$ et 1,6% de $SiO_2$. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur NU85NiMoPBSiF.

Les extrudés de support contenant une zéolithe NU-85 de l'exemple 1 sont imprégnés à sec par une solution aqueuse d'heptamolybdate d'ammonium, séchés une nuit à 120°C sous air et enfin calcinés sous air à 550°C.

On effectue les mêmes imprégnations sur l'échantillon de catalyseur NU85Mo de manière à obtenir les catalyseursNU85MoB, NU85MoSi et NU85MoBsi. Les teneurs finales en oxydes des catalusers NU85Mo sont indiquées dans le tableau 2.

Tableau 2 :

| Caractéristiques des catalyseurs NU85NiMo et NU85Mo | | | | |
|---|---|---|---|---|
| Catalyseur | NU85Mo | NU85Mo B | NU85Mo Si | NU85Mo BSi |
| $MoO_3$ (% pds) | 14,6 | 14,4 | 14,4 | 14,1 |
| $B_2O_3$ (% pds) | 0 | 1,8 | 0 | 1,75 |
| $SiO_2$ (% pds) | 14,8 | 14,5 | 16,1 | 15,9 |
| Complément à 100% composé majoritairement de $Al_2O_3$ (% pds) | 70,6 | 69,3 | 69,5 | 68,2 |

| Catalyseur | NU85NiMo | NU85 NiMo P | NU85 NiMo PB | NU85 NiMo PSi | NU85N iMo PBSi | NU85 NiMo PBSiF |
|---|---|---|---|---|---|---|
| $MoO_3$(% pds) | 14,3 | 13,7 | 13,5 | 13,5 | 13,2 | 13,1 |
| NiO (% pds) | 3,1 | 2,9 | 2,9 | 2,9 | 2,8 | 2,8 |
| $P_2O_5$ (% pds) | 0 | 4,8 | 4,8 | 4,7 | 4,7 | 4,6 |
| $B_2O_3$ (% pds) | 0 | 0 | 1,75 | 0 | 1,7 | 1,7 |
| $SiO_2$ (% pds) global | 14,4 | 13,6 | 13,4 | 15,0 | 14,7 | 14,6 |
| F (% pds) | 0 | 0 | 0 | 0 | 0 | 1,15 |
| Complément à 100% (majoritairement composé de $Al_2O_3$ (% pds) | 68,2 | 65,0 | 63,65 | 63,9 | 62,9 | 62,05 |

Le catalyseur NU85NiMoP a ensuite été imprégné par une solution aqueuse renfermant du nitrate de manganèse de manière à déposer environ 2% de $MnO_2$. Après maturation à température ambiante dans une atmosphère saturée en eau, les extrudés imprégnés sont séchés pendant une nuit à 120°C, puis calcinés à 550°C pendant 2 heures sous air sec. On obtient un catalyseur nommé NU85NiMoPMn. On imprègne ensuite ce catalyseur par une solution aqueuse renfermant le biborate d'ammonium et l'émulsion de silicone Rhodorsil EP1 (Rhone-Poulenc) de manière à déposer 1.8% de $B_2O_3$ et 1.6% de $SiO_2$. Les extrudés imprégnés sont alors séchés pendant une nuit à 120°C, puis calcinés à 550°C pendant 2 heures sous air sece et on obtient le catalyseur NU85NiMoPMnBSi. On ajoute ensuite à ce catalyseur du fluor par imprégnation d'une solution d'acide fluorhydrique diluée de manière à déposer environ 1% en poids de fluor. Après séchage pendant une nuit à 120°C et calcination à 550°C pendant 2 heures sous air sec, on obtient le catalyseur NU85NiMoPMnBSiF. Les teneurs pondérales de ces catalyseurs sont indiquées dans le tableau 3.

Tableau 3 :

| Caractéristiques des catalyseurs NU85NiMo contenant du manganèse | | | |
|---|---|---|---|
| Catalyseur | NU85NiMo | NU85NiMo | NU85NiMo |
| MoO$_3$ (% pds) | 13.4 | 13.0 | 12.9 |
| NiO (% pds) | 2.9 | 2.8 | 2.7 |
| MnO$_2$ (% pds) | 2.0 | 1.9 | 1.9 |
| P2O$_5$ (% pds) | 4.75 | 4.6 | 4.6 |
| B$_2$O$_3$ (% pds) | 0 | 1.6 | 1.6 |
| SiO$_2$ (% pds) | 13.3 | 14.6 | 14.4 |
| F(% pds) | 0 | 0 | 0.96 |
| Complément à 100% composé majoritairement de Al$_2$O$_3$ (% pds) | 63.65 | 61.5 | 60.94 |

L'analyse, par microsonde électronique, des catalyseurs NU85NiMoPSi, NU85NiMoPBSi, NU85NiMoPBSiF (tableau 2), et des catalyseurs NU85NiMoPMnBSi, NU85NiMoPMnBSiF (tableau 4), des catalyseurs NU85Mo, NU85MoB, NU85MoSi, NU85MoBSi (tableau 2) montre que le silicium ajouté au catalyseur selon l'invention est principalement localisé sur la matrice et se trouve sous forme de silice amorphe.

**Exemple 3 : Préparation d'un support contenant une zéolithe Nu-85 et une silice-alumine**

Nous avons fabriqué une poudre de silice-alumine par coprécipitation ayant une composition de 2% SiO$_2$ et 98% Al$_2$O$_3$. Un support de catalyseur d'hydrocraquage contenant cette silice-alumine et la zéolithe Nu-85 de l'exemple 1 a été ensuite fabriqué. Pour cela on utilise 19,1 % poids de la zéolithe Nu-85 de l'exemple 1 que l'on mélange à 80,9 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air.

**Exemple 4 : Préparation de catalyseurs d'hydrocraquage contenant une zéolithe NU-85 et une silice-alumine**

Les extrudés de support contenant une silice-alumine et une zéolithe Nu-85 de l'exemple 3 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur NU85-SiAl-NiMoP obtenus sont indiquées dans le tableau 4.
Nous avons imprégné l'échantillon de catalyseur NU85-SiAl-NiMoP par une solution aqueuse renfermant du biborate d'ammonium de manière a imprégner 1,8% masse de B2O3. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé NU85-SiAl-NiMoPBqui contient donc du silicium dans ! a matrice silice-alumine.
Les caractéristiques des catalyseurs NU85-SiAl-NiMo sont résumées dans le tableau 4.

Tableau 4 :

| Caractéristiques des catalyseurs NU85-SiAl-NiMo | | |
|---|---|---|
| Catalyseur | NU85-SiAl-NiMo P | NU85-SiAl-NiMo PB |
| MoO$_3$ (% pds) | 13.5 | 13.3 |
| NiO (% pds) | 2.8 | 2.8 |
| P$_2$O$_5$ (% pds) | 5.0 | 4.9 |
| B$_2$O$_3$ (% ds) | 0 | 1.7 |

Tableau 4 :   (suite)

| Caractéristiques des catalyseurs NU85-SiAl-NiMo | | |
|---|---|---|
| Catalyseur | NU85-SiAl-NiMo P | NU85-SiAl-NiMo PB |
| SiO$_2$ (% pds) | 15.3 | 15.0 |
| Complément à 100% composé majoritairement de Al$_2$O$_3$ (% pds) | 63.4 | 62.3 |

## Exemple 5 : Préparation d'un support contenant une zéolithe NU-86

Un support de catalyseur d'hydrocraquage contenant une zéolithe NU-86 a été fabriqué en grande quantité de façon à pouvoir préparer différents catalyseurs à base du même support. La matière première utilisée est une zéolithe NU-86, qui est préparée selon l'exemple 2 du brevet EP 0 463768 A2 et possède un rapport Si/Al atomique global égal à 10,2 et un rapport atomique Na/Al égal 0,25.

Cette zéolithe NU-86, brute de synthèse, subit tout d'abord une calcination dite sèche à 550°C sous flux d'air sec durant 9 heures. Puis le solide obtenu est soumis à quatre échanges ioniques dans une solution de NH$_4$NO$_3$ 10N, à environ 100°C pendant 4 heures pour chaque échange. Le solide ainsi obtenu est référencé NH4-NU-86/1 et possède un rapport Si/Al = 10,4 et un rapport Na/Al = 0,013. Ses autres caractéristiques physico-chimiques sont regroupées dans le tableau 5.

Tableau 5

| Echantillon | Diffraction X Cristallinité (%) | Adsorption | |
|---|---|---|---|
| | | S$_{BET}$ (m$^2$/g) | V(P/P$_O$ = 0,19) ml N$_2$ liquide/g |
| NH4-NU-86/1 | 100 | 423 | 0,162 |

Les cristallites de la zéolithe NU-86 se présentent sous forme de cristaux dont la taille varient de 0,4 μm à 2 μm.

Ensuite, 19,5 g de la zéolithe NH$_4$-NU-86/2 sont mélangés à 80,5 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% poids (7% poids d'acide par gramme de gel sec) puis malaxé pendant 15 minutes. La pâte malaxée est ensuite extrudée à travers une filière de diamètre 1,2 mm. Les extrudés sont ensuite calcinés à 500°C durant 2 heures sous air .

## Exemple 6: Préparation de catalyseurs d'hydrocraquage contenant une zéolithe

## NU-86

On reproduit la même préparation que celle décrite à l'exemple 2, mais en utilisant les extrudés de support contenant une zéolithe NU-86 de l'exemple 5.

Les teneurs pondérales en oxydes du catalyseur NU86NiMo et NU-86Mo obtenus sont indiquées dans le tableau 6.

Tableau 6 :

| Caractéristiques des catalyseurs NU86Mo et NU86NiMo | | | | |
|---|---|---|---|---|
| Catalyseur | NU86Mo | NU86Mo B | NU86Mo Si | NU86Mo BSi |
| MoO$_3$ (% pds) | 14,6 | 14,3 | 14,3 | 14,1 |
| B$_2$O$_3$ (% pds) | 0 | 1,8 | 0 | 1,6 |
| SiO$_2$ (% pds) | 15,2 | 14,9 | 16,6 | 16,1 |
| Complément à 100% composé majoritairement de Al$_2$O$_3$ (% pds) | 70,2 | 68,9 | 69,1 | 67,9 |

| Catalyseur | NU86 NiMo | NU86 NiM P | NU86 NiMo PB | NU86 NiMo PSi | NU86NiMo PBSi | NU86NiMo PBSiF |
|---|---|---|---|---|---|---|
| $MoO_3$ (% pds) | 14,1 | 13,4 | 13,2 | 13,2 | 12,9 | 12,8 |
| NiO (% pds) | 3,2 | 3,1 | 3,0 | 3,0 | 2,9 | 2,9 |
| $P_2O_5$ (% pds) | 0 | 4,1 | 4,1 | 4,1 | 4,0 | 4,0 |
| $B_2O_3$ (% pds) | 0 | 0 | 2,0 | 0 | 1,9 | 1,9 |
| $SiO_2$ (% pds) global | 14,7 | 14,1 | 13,8 | 15,5 | 15,2 | 14,9 |
| F (% pds) | 0 | 0 | 0 | 0 | 0 | 1,1 |
| Complément à 100% (majoritairement composé de $Al_2O_3$ (% pds) | 68,0 | 65,3 | 63,9 | 64,2 | 63,1 | 62,4 |

Les teneurs pondérales des catalyseurs NU86NiMoMn sont indiquées dans le tableau 7.

Tableau 7 :

| Caractéristiques des catalyseurs NU86NiMo contenant du manganèse | | | |
|---|---|---|---|
| Catalyseur | NU86NiMo PMn | NU86NiMo PMnBSi | NU86NiMo PMnBSiF |
| $MoO_3$ (% pds) | 13,2 | 12,7 | 12,6 |
| NiO (% pds) | 3,0 | 2,9 | 2,9 |
| $MnO_2$ (% pds) | 2,1 | 2,0 | 2,0 |
| $P_2O_5$ (% pds) | 4,1 | 3,95 | 3,9 |
| $B_2O_3$ (% pds) | 0 | 1,9 | 1,9 |
| $SiO_2$ (% pds) global | 13,8 | 14,8 | 14,7 |
| F (%pds) | 0 | 0 | 1,1 |
| Complément à 100% (majoritairement composé de $Al_2O_3$ (% pds) | 63,8 | 61,75 | 60,9 |

L'analyse, par microsonde électronique, des catalyseurs NU86NiMoPSi, NU86NiMoPBSi, NU86NiMoPBSiF (tableau 6) et des catalyseurs NU86NiMoPMnBSi, NU86NiMoPMnBSiF (tableau 7) montre que le silicium ajouté au catalyseur selon l'invention est principalement localisé sur la matrice et se trouve sous forme de silice amorphe.

**Exemple 7 : Préparation d'un support contenant une zéolithe Nu-86 et une silice-alumine**

On reproduit la même préparation que celle décrite à l'exemple 3, mais en utilisant la zéolithe NU-86 de l'exemple 5.

**Exemple 8 : Préparation de catalyseurs d'hydrocraquage contenant une zéolithe NU-86 et une silice-alumine**

On reproduit la même préparation que celle décrite à l'exemple 4, mais en utilisant les extrudés de support contenant une silice-alumine et une zéolithe NU-86 de l'exemple 7.
Les caractéristiques des catalyseurs NU86-SiAl-NiMo sont résumées dans le tableau 8.

# EP 0 938 926 B1

Tableau 8 :

| Caractéristiques des catalyseurs NU86-SiAl-NiMo | | |
|---|---|---|
| Catalyseur | NU86-SiAl-NiMo P | NU86-SiAl-NiMo PB |
| $MoO_3$ (% pds) | 13,4 | 13,3 |
| NiO (% pds) | 3,0 | 2,8 |
| $P_2O_5$ (% pds) | 4,2 | 4,1 |
| $B_2O_3$ (% pds) | 0 | 2,0 |
| $SiO_2$ (% pds) | 15,5 | 15,2 |
| Complément à 100% composé majoritairement de $Al_2O_3$ (% pds) | 63,9 | 62,6 |

## Exemple 9: Préparation d'un support de catalyseur d'hydrocraquage contenant une zéolithe NU-87

La matière première utilisée est une zéolithe NU-87, qui possède un rapport atomique Si/Al global égal à 17,2, une teneur pondérale en sodium correspondant à un rapport atomique Na/Al égal à 0,144. Cette zéolithe NU-87 a été synthétisée d'après la demande de brevet européen EP-A-0.377.291.

Cette zéolithe NU-87 subit tout d'abord une calcination dite sèche à 550°C sous flux d'air sec durant 6 heures. Puis le solide obtenu est soumis à quatre échanges ioniques dans une solution de $NH_4NO_3$ 10N, à environ 100°C pendant 4 heures pour chaque échange. Le solide ainsi obtenu est référencé NH4-NU-87 et possède un rapport Si/Al = 17,4 et un rapport Na/Al=0,002. Ses autres caractéristiques physico-chimiques sont regroupées dans le tableau 9.

Tableau 9

| Echantillon | Diffraction X : Paramètres | | | | | | Adsorption | |
|---|---|---|---|---|---|---|---|---|
| | a (Å) | b (Å) | c (Å) | β (°) | V (Å³) | Crist.[1] (%) | $S_{BET}$ (m²/g) | V[2] |
| NH4-NU-87 | 14,35 | 22,34 | 25,14 | 151,53 | 3840 | 100 | 466 | 0,19 |

[1] Cristallinité,

[2] V à P/Po=0,19 en ml N2 liquide/g

Un support de catalyseur d'hydrocraquage contenant une zéolithe NU-87 est fabriqué de la façon suivante : on utilise 20 % poids d'une zéolithe NU-87 que l'on mélange à 80 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air.

## Exemple 10: Préparation de catalyseurs d'hydrocraguage contenant une zéolithe NU-87

On reproduit la même préparation que celle décrite à l'exemple 2 en utilisant les extrudés de support contenant une zéolithe NU-87 de l'exemple 9.

Les teneurs finales en oxydes des catalyseurs NU87NiMo et NU87Mo sont indiquées dans le tableau 10.

Tableau 10 :

| Caractéristiques des catalyseurs NU87Mo et NU87NiMo | | | | |
|---|---|---|---|---|
| Catalyseur | NU87Mo | NU87Mo B | NU87Mo Si | NU87Mo BSi |
| $MoO_3$ (% pds) | 14,3 | 14,0 | 14,0 | 13,8 |
| $B_2O_3$ (% pds) | 0 | 1,9 | 0 | 1,8 |
| $SiO_2$ (% pds) | 15,4 | 15,1 | 16,6 | 16,3 |
| Complément à 100% composé maioritairement de $Al_2O_3$ (% pds) | 70,3 | 69,0 | 69,3 | 68,1 |

| Catalyseur | NU87 NiMo | NU87N iMo P | NU87 NiMo PB | NU87 NiMo PSi | NU87Ni Mo PBSi | NU87Ni Mo PBSiF |
|---|---|---|---|---|---|---|
| $MoO_3$ (% pds) | 13,4 | 13,4 | 13,1 | 13,1 | 12,9 | 12,8 |
| NiO (% pds) | 3,1 | 3,1 | 3,1 | 3,1 | 3,0 | 3,0 |
| $P_2O_5$ (% pds) | 0 | 4,35 | 4,3 | 4,2 | 4,2 | 4,2 |
| $B_2O_3$ (% pds) | 0 | 0 | 1,8 | 0 | 1,7 | 1,7 |
| $SiO_2$ (% pds) global | 14,8 | 14,3 | 14,0 | 15,5 | 15,3 | 15,1 |
| F (% pds) | 0 | 0 | 0 | 0 | 0 | 0,9 |
| Complément à 100% (majoritairement composé de $Al_2O_3$ (% pds) | 68,7 | 64,85 | 63,7 | 64,1 | 62,9 | 62,3 |

Les teneurs pondérales du catalyseur NU87NiMoMn sont indiquées dans le tableau 11.

Tableau 11 :

| Caractéristiques des catalyseurs NU87NiMo contenant du manganèse | | | |
|---|---|---|---|
| Catalyseur | NU87NiMo PMn | NU87NiMo PMnBSi | NU87NiMo PMnBSiF |
| $MoO_3$ (% pds) | 13,1 | 12,7 | 12,6 |
| NiO (% pds) | 3,1 | 3,0 | 2,9 |
| $MnO_2$ (% pds) | 1,9 | 1,8 | 1,8 |
| $P_2O_5$ (% pds) | 4,3 | 4,1 | 4,1 |
| $B_2O_3$ (% pds) | 0 | 1,9 | 1 ,9 |
| $SiO_2$ (% pds) global | 13,9 | 14,8 | 14,7 |
| F (%pds) | 0 | 0 | 0,9 |
| Complément à 100% (majoritairement composé de $Al_2O_3$ (% pds) | 63,7 | 61,7 | 61,1 |

L'analyse, par microsonde électronique, des catalyseurs NU87NiMoPSi, NU86NiMoPBSi, NU86NiMoPBSiF (tableau 10) et des catalyseurs NU87NiMoPMnBSi, NU87NiMoPMnBSiF (tableau 11) montre que le silicium ajouté au catalyseur selon l'invention est principalement localisé sur la matrice et se trouve sous forme de silice amorphe.

## Exemple 11 : Préparation d'un support contenant une zéolithe Nu-87 et une silice-alumine

On reproduit la même préparation que celle décrite à l'exemple 3, mais en utilisant la zéolithe NU-87.

## Exemple 12 : Préparation de catalyseurs d'hydrocraquage contenant une zéolithe NU-87 et une silice-alumine

On reproduit la même préparation que celle décrite à l'exemple 4, mais en utilisant les extrudés de support contenant une silice-alumine et une zéolithe Nu-87 de l'exemple 11.
Les caractéristiques des catalyseurs NU87-SiAl-NiMo sont résumées dans le tableau 12.

Tableau 12 :

| Caractéristiques des catalyseurs NU87-SiAl-NiMo | | |
|---|---|---|
| Catalyseur | NU87-SiAl-NiMo P | NU87-SiAl-NiMo PB |
| $MoO_3$ (% pds) | 13,4 | 13,1 |
| NiO (% pds) | 3,0 | 2,9 |
| $P_2O_5$ (% pds) | 4,2 | 4,1 |
| $B_2O_3$ (% pds) | 0 | 2,0 |
| $SiO_2$ (% pds) | 16,4 | 16,1 |
| Complément à 100% composé majoritairement de $Al_2O_3$ (% pds) | 63,1 | 61,9 |

**Exemple 13 : Comparaison des catalyseurs en hydrocraquage d'un gazole sous vide à conversion partielle.**

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée point initial | 365°C |
| point 10 % | 430°C |
| point 50 % | 472°C |
| point 90 % | 504°C |
| point final | 539°C |
| point d'écoulement | + 39°C |

L'unité de test catalytique comprend deux réacteurs en lit fixe, à circulation ascendante de la charge ("upflow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un catalyseur d'hydrocraquage décris ci-dessus. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 cm$^3$ |
| Catalyseur d'hydrocraquage | 40 cm$^3$ |
| Température | 400°C |
| Débit d'hydrogène | 20 l/h |
| Débit de charge | 40 cm$^3$/h |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380^\circ C^{\text{ moins}} \text{ de l'effluent}$$

La sélectivité brute SB en distillats moyens est prise égale à :

$$SB = 100 \text{*poids de la fraction } (150^\circ C\text{-}380^\circ C)/\text{poids de la fraction } 380^\circ C^{\text{ moins}} \text{ de l'effluent}$$

La conversion en hydrodésulfuration HDS est prise égale à :

$$HDS = (S_{\text{initial}} - S_{\text{effluent}}) / S_{\text{initial}} * 100 = (24600 - S_{\text{effluent}}) \, 24600 * 100$$

La conversion en hydrodéazotation HDN est prise égale à :

$$HDN = (N_{\text{initial}} - N_{\text{effluent}}) / N_{\text{initial}} * 100 = (1130 - N_{\text{effluent}}) \, 1130 * 100$$

Dans le tableau suivant, nous avons reporté la conversion brute CB à 400°C, la sélectivité brute SB, la conversion en hydrodésulfuration HDS et la conversion en hydrodéazotation HDN pour les catalyseurs.

Tableau 13 :

| Activités catalytiques des catalyseurs en hydrocraquage partiel à 400°C | | | | |
|---|---|---|---|---|
| | CB (% pds) | SB (%) | HDS (%) | HDN (%) |
| NiMo/NU-85 | 45,5 | 70,8 | 99,01 | 94,2 |
| NiMoP/ NU-85 | 45,8 | 70,1 | 99,33 | 95,9 |
| NiMoPB/NU-85 | 46,2 | 70,8 | 99,47 | 96,9 |
| NiMoPBSi/ NU-85 | 46,8 | 70,9 | 99,52 | 97,8 |
| NiMoPBSi/Nu85 | 48,1 | 70,1 | 99,61 | 98,6 |
| NiMoP/ Nu85-SiAl | 45,7 | 70,1 | 98,28 | 95,5 |
| NiMoPB/Nu85-SiAl | 46,2 | 70,7 | 98,16 | 97,7 |
| NiMo/NU-86-Al | 49,6 | 59,7 | 98,7 | 95,7 |
| NiMoP/NU-86-Al | 49,6 | 60,2 | 99,3 | 96,2 |
| NiMoPB/NU-86-Al | 49,9 | 61,3 | 99,4 | 97,1 |
| NiMoP/Nu86-SiAl | 49,7 | 59,5 | 98,3 | 95,5 |
| NiMoPB/Nu86-SiAl | 46,2 | 59,9 | 98,1 | 97,7 |
| NiMoPSi/NU-86-Al | 50,2 | 59,9 | 99,6 | 97,9 |
| NiMoPBSi/NU-86-Al | 50,5 | 60,4 | 99,7 | 98,1 |
| NiMo/NU-87-Al | 47,7 | 68,1 | 98,6 | 95,0 |
| NiMoP/NU-87-Al | 47,8 | 68,2 | 99,1 | 95,3 |
| NiMoPB/NU-87-Al | 48,4 | 68,4 | 99,3 | 96,4 |
| NiMoP/Nu87-SiAl | 46,7 | 69,5 | 98,3 | 95,5 |
| NiMoPB/Nu87-SiAl | 46,2 | 68,3 | 98,1 | 96,3 |
| NiMoPSi/NU-87-Al | 48,6 | 68,9 | 99,4 | 98,1 |
| NiMoPBSi/NU-87-Al | 49,1 | 68,1 | 99,6 | 98,3 |

Les résultats du tableau 13 montrent que l'ajout de B et/ou de Si aux catalyseurs NiMo et NiMoP apporte une amélioration des performances du catalyseur en conversion quelque soit la zéolithe du groupe NU-85, NU-86 et NU-87. En effet, les catalyseurs selon l'invention NiMoB, NiMoSi, NiMoPBSi présentent une activité plus grande, c'est à dire des conversions plus élevées pour une même réaction de température de 400°C, que les catalyseurs non conformes NiMo et NiMoP. Les catalyseurs de l'invention contenant du bore et/ou du silicium sont donc particulièrement intéressants pour l'hydrocraquage partiel de charge de type distillats sous vide contenant de l'azote à une pression d'hydrogène modérée.

De plus les résultats du tableau 13 montrent qu'il est avantageux d'introduire le silicium sur le catalyseur déjà préparé, plutôt que sous la forme d'un support contenant du silicium obtenu à partir d'une silice-alumine (série SiAl-NiMo et SiAl-NiMo). Il est donc particulièrement avantageux d'introduire le silicium sur un précurseur contenant déjà les éléments du groupe VIB et/ou VIII et éventuellement au moins l'un des éléments P, B et F.

### Exemple 14 : Comparaison des catalyseurs en hydrocraquage d'un gazole sous vide à haute conversion

Les catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VIB et un élément du groupe VIII déposés sur alumine.

On ajoute à la charge 0,6% poids d'aniline et 2% poids de diméthyl-disulfure afin de simuler les pressions partielles d'$H_2S$ et d'$NH_3$ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320 °C. Notons que toute méthode de sulfuration in-situ ou ex-situ est convenable. Une fois la sulfuration réalisée, la charge décrite ci-dessus peut être transformée. Les conditions opératoires de l'unité de test sont les suivantes :

| | |
|---|---|
| Pression totale | 9 Mpa |
| Catalyseur | 80 cm$^3$ |
| Température | 360-420°C |
| Débit d'hydrogène | 80 l/h |
| Débit de charge | 80 cm$^3$/h |

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée.

La conversion brute CB est prise égale à

$$CB = \% \text{ pds de } 380°C^{\text{ moins}} \text{ de l'effluent}$$

380°C moins représente la fraction distillée à une température inférieure ou égale à 380°C.

La sélectivité brute SB en distillat moyen est prise égale à :

$$SB = 100*\text{poids de la fraction } (150°C\text{-}380°C)/\text{poids de la fraction } 380°C^{\text{ moins}} \text{ de l'effluent}$$

La température de réaction est fixée de façon à atteindre une conversion brute CB égale à 70% poids. Dans le tableau 14 suivant, nous avons reporté la température de réaction et la sélectivité brute.

Tableau 14

| Activités catalytiques des catalyseurs en hydrocraquage haute conversion (70%) | | |
|---|---|---|
| | T(°C) | SB |
| NiMo/NU-85 | 386 | 31,7 |
| NiMoP/NU-85 | 385 | 31,7 |
| NiMoPB/NU-85 | 383 | 32,0 |
| NiMoPBSi/NU-85 | 384 | 32,1 |
| NiMoPBSi/NU-85 | 383 | 32,4 |
| NiMoPBSiF/NU-85 | 382 | 32,7 |
| NiMoPMn/NU-85 | 384 | 31,9 |
| NiMoPMnBSi-85 | 382 | 32,1 |
| NiMoPMnBSiF/NU-85 | 381 | 32,9 |
| Mo/NU-85 | 387 | 29,3 |
| MoB/NU-85 | 386 | 29,9 |
| MoSi/NU-85 | 386 | 30,1 |
| MoBSi/NU-85 | 384 | 30,4 |
| NiMo/NU-86 | 373 | 36,0 |
| NiMoP/NU-86 | 371 | 36,2 |
| NiMoPB/NU-86 | 370 | 36,3 |
| NiMoPSi/NU-86 | 369 | 37,4 |
| NiMoPBSi/NU-86 | 367 | 36,3 |
| NiMoPBSiF/NU-86 | 365 | 37,1 |
| NiMoPMn/NU-86 | 371 | 37,3 |
| NiMoPMnBSi/NU-86 | 368 | 37,1 |
| NiMoPMnBSiF/NU-86 | 365 | 37,4 |
| Mo/NU-86 | 373 | 34,1 |
| MoB/ NU-86 | 373 | 33,9 |
| MoSi/ NU-86 | 372 | 33,0 |
| MoBSi/ NU-86 | 371 | 33,6 |
| NiMo/NU-87 | 384 | 30,6 |
| NiMoP/NU-87 | 383 | 32,5 |
| NiMoPB/NU-87 | 380 | 32,9 |
| NiMoPSi/NU-87 | 379 | 32,7 |
| NiMoPBSi/NU-87 | 378 | 32,3 |
| NiMoPBSiF/NU-87 | 376 | 34,4 |
| NiMoPMn/NU-87 | 380 | 32,9 |
| NiMoPMnBSi/NU-87 | 378 | 33,4 |
| NiMoPMnBSiF/NU-87 | 375 | 34,1 |

Tableau 14   (suite)

| Activités catalytiques des catalyseurs en hydrocraquage haute conversion (70%) | | |
|---|---|---|
| | T(°C) | SB |
| Mo/NU-87 | 385 | 30,6 |
| MoB/ NU-87 | 384 | 30,3 |
| MoSi/ NU-87 | 383 | 29,6 |
| MoBSi/ NU-87 | 383 | 29,1 |

L'ajout de bore et/ou de silicium aux catalyseurs contenant une zéolithe du groupe NU-85, NU-86 et NU-87 permet d'améliorer l'activité en conversion, ce qui se traduit par une diminution de la température de réaction nécessaire pour atteindre 70% de conversion. De plus, si l'on ajoute du manganèse et/ou du fluor on constate également une amélioration de l'activité convertissante avec une nette amélioration de la sélectivité brute en distillats moyens. On attribue cet effet à une fonction hydrogénante exaltée par les dopants Mn et/ou F.

Les catalyseurs contenant de la zéolithe NU-85, NU-86 ou NU-87 de l'invention contenant du bore et du silicium sont donc particulièrement intéressants pour l'hydrocraquage à haute conversion de charge de type distillats sous vide à une pression d'hydrogène modérée.

**Revendications**

1.  Catalyseur renfermant un support contenant au moins une matrice, au moins une zéolithe choisi parmi la zéolithe NU-85, NU-86 et la zéolithe NU-87, ledit catalyseur renfermant en outre au moins un métal choisi dans le groupe formé par les métaux des groupes VIB et les métaux du groupe VIII de la classification périodique des éléments, ledit catalyseur étant **caractérisé en ce qu'**il renferme à titre de promoteur au moins un élément choisi dans le groupe formé par le silicium et le bore.

2.  Catalyseur selon la revendication 1 comprenant une zéolithe NU-85.

3.  Catalyseur selon la revendication 1 comprenant une zéolithe NU-86.

4.  Catalyseur selon la revendication 1 comprenant une zéolithe NU-87.

5.  Catalyseur selon l'une des revendications 1 à 4 **caractérisé en ce qu'**il renferme en outre du phosphore.

6.  Catalyseur selon l'une des revendications 1 à 5 **caractérisé en ce qu'**il renferme en outre au moins un élément choisi dans le groupe VIIA de la classification périodique des éléments.

7.  Catalyseur selon l'une des revendications 1 à 6 **caractérisé en ce qu'**il renferme en outre au moins un élément choisi dans le groupe VIIB de la classification périodique des éléments.

8.  Catalyseur selon l'une des revendications 1 à 7 **caractérisé en ce que** le silicium est introduit sous forme amorphe.

9.  Catalyseur selon l'une des revendications 1 à 8 dans lequel la zéolithe est sous forme hydrogène.

10. Catalyseur selon l'une des revendications 1 à 9 renfermant en poids par rapport au catalyseur :

    • 0,1 à 60% d'au moins un métal choisi dans le groupe formé par les métaux du groupe VIB et du groupe VIII,
    • 0,1 à 90% d'au moins une zéolithe choisie parmi la zéolithe NU-85, NU-86 et NU-87,
    • 0,1 à 99% d'au moins une matrice minérale amorphe ou mal cristallisée,
    • 0,1 à 20% d'au moins un élément promoteur choisi dans le groupe formé par le bore et le silicium,
    • 0 à 20% de phosphore,
    • 0 à 20% d'au moins un élément choisi dans le groupe VIIA,
    • 0 à 20% d'au moins un élément choisi dans le groupe VIIB.

**11.** Procédé de préparation d'un catalyseur selon l'une des revendications 1 à 10 dans lequel :

a) on sèche et on pèse un solide ci-après dénommé précurseur, renfermant au moins les composés suivants: au moins une matrice, au moins une zéolithe choisie parmi la zéolithe NU-85 et NU-87, au moins un élément du groupe formé par les éléments du groupe VIB et du groupe VIII, le tout étant de préférence mis en forme,

b) on imprègne le solide précurseur défini à l'étape a), par au plus une solution aqueuse contenant au moins un élément choisi parmi le bore et le silicium,

c) on laisse reposer le solide humide obtenu à l'étape b) sous une atmosphère humide à une température comprise entre 10 et 80°C,

d) on sèche le solide obtenu à l'étape c) à une température comprise entre 60 et 150°C,

e)on calcine le solide obtenu à l'étape d) à une température comprise entre 150 et 800°C.

**12.** Procédé de préparation d'un catalyseur selon la revendication 11 tel qu'on introduit en outre à l'étape b) au moins un élément choisi parmi le phosphore, les éléments du groupe VIIA et les éléments du groupe VIIB.

**13.** Procédé de préparation d'un catalyseur selon l'une des revendications 11 à 12 dans lequel on procède à une calcination et à un séchage entre chaque imprégnation d'un élément.

**14.** Utilisation d'un catalyseur selon l'une des revendications 1 à 10 ou préparé selon l'une des revendications 11 à 12 dans un procédé d'hydrocraquage de charges hydrocarbonées.

**15.** Utilisation selon la revendication 14 telle que la charge est constituée d'au moins 80% en volume de composés dont les points d'ébullition sont d'au moins 350°C.

**16.** Utilisation selon l'une des revendications 14 à 15 telle que la température est supérieure à 200°C, sous une pression supérieure à 0,1 Mpa, avec un taux de recyclage d'hydrogène supérieur à 50 normaux litres d'hydrogène par litre de charge et avec une vvh comprise entre 0,1 et 20 h-1.

**17.** Utilisation selon l'une des revendications 14 à 16 dans un procédé d'hydrocraquage partiel, avec un niveau de conversion inférieur à 55%.

**18.** Utilisation selon la revendication 17 telle que la température est supérieure ou égale à 230°C, sous une pression supérieure à 2 Mpa, avec une quantité d'hydrogène supérieure à 100 normaux litres d'hydrogène par litre de charge, avec une vitesse volumique horaire comprise entre 0,1 et 10h-1.

**19.** Utilisation selon l'une des revendications 14 à 16 dans un procédé d'hydrocraquage avec un niveau de conversion supérieur à 55%.

**20.** Utilisation selon la revendication 19 telle que la température est supérieure ou égale à 230°C, sous une pression supérieure à 5 Mpa, avec une quantité d'hydrogène supérieure à 100 normaux litres d'hydrogène par litre de charge, avec une vitesse volumique horaire comprise entre 0,15 et 10h-1.

**21.** Utilisation selon l'une des revendications 14 à 20 dans lequel on effectue une étape préalable d'hydrotraitement à une température comprise entre 350 et 460°C, sous une pression supérieure à 3 Mpa, avec une quantité d'hydrogène supérieure à 100 normaux litres d'hydrogène par litre de charge, avec une vitesse volumique horaire comprise entre 0,1 et 5h-1 en présence d'un catalyseur d'hydrotraitement.

**Patentansprüche**

**1.** Katalysator, der einen Träger, der wenigstens eine Matrix enthält, wenigstens einen Zeolithen, gewählt unter den Zeolithen NU-85, NU-86 und dem Zeolith NU-87 einschließt, wobei der Katalysator im übrigen wenigstens ein Metall, gewählt aus der Gruppe, die durch die Metalle der Gruppe VIB und die Metalle der Gruppe VIII des Periodensystems der Elemente gebildet wird, einschließt, wobei der Katalysator **dadurch gekennzeichnet ist, dass** er als Promotor wenigstens ein Element, gewählt aus der durch Silizium und Bor gebildeten Gruppe einschließt.

2. Katalysator nach Anspruch 1, der einen NU-85-Zeolith umfasst.

3. Katalysator nach Anspruch 1, der einen NU-86-Zeolith umfasst.

4. Katalysator nach Anspruch 1, der einen NU-87-Zeolith umfasst.

5. Katalysator nach einem der Ansprüche 1 bis 4, **dadurch gekennzeichnet, dass** er außerdem Phosphor einschließt.

6. Katalysator nach einem der Ansprüche 1 bis 5, **dadurch gekennzeichnet, dass** er außerdem wenigstens ein Element, gewählt aus der Gruppe VIIA des Periodensystems der Elemente einschließt.

7. Katalysator nach einem der Ansprüche 1 bis 6, **dadurch gekennzeichnet, dass** er außerdem wenigstens ein Element, gewählt aus der Gruppe VIIB des Periodensystems der Elemente einschließt.

8. Katalysator nach einem der Ansprüche 1 bis 7, **dadurch gekennzeichnet, dass** das Silizium in amorpher Form eingeführt ist.

9. Katalysator nach einem der Ansprüche 1 bis 8, **dadurch gekennzeichnet, dass** der Zeolith in Wasserstofform vorliegt.

10. Katalysator nach einem der Ansprüche 1 bis 9, der an Gewicht im Verhältnis zum Katalysator einschließt:

   - 0,1 bis 60% wenigstens eines Metalls, gewählt aus der Gruppe, die durch die Metalle der Gruppe VIB und der Gruppe VIII gebildet wird,

   - 0,1 bis 90% wenigstens eines Zeolithen, der unter den Zeolithen NU-85, NU-86 und NU-87 gewählt ist,

   - 0,1 bis 99% wenigstens einer amorphen oder schlecht kristallisierten mineralischen Matrix,

   - 0,1 bis 20% wenigstens eines Promotorelements, gewählt aus der durch Bor und Silizium gebildeten Gruppe,

   - 0,1 bis 20% Phosphor,

   - 0 bis 20% wenigstens eines Elements, das aus der Gruppe VIIA gewählt ist.

   - 0 bis 20% wenigstens eines Elements, das aus der Gruppe VIIB gewählt ist.

11. Verfahren zur Herstellung eines Katalysators nach einem der Ansprüche 1 bis 10 bei dem man

   a. einen nachfolgend Vorläufer genannten Feststoff trocknet und wiegt, der wenigstens eine der folgenden Verbindungen einschließt: wenigstens eine Matrix, wenigstens einen Zeolithen, gewählt unter den Zeolithen NU-85 und NU-87, wenigstens ein Element der Gruppe, die durch die Elemente der Gruppen VIB und VIII gebildet wird, wobei das Ganze vorzugsweise geformt wird,

   b. man den in Stufe a. definierten Vorläuferfeststoff durch wenigstens eine wässrige Lösung imprägniert, die wenigstens ein Element, gewählt unter Bor und Silizium enthält,

   c. man den feuchten in Stufe b. erhaltenen Feststoff unter feuchter Atmosphähre bei einer Temperatur zwischen 10 und 80°C ruhen lässt,

   d. man den in Stufe c. erhaltenen Feststoff bei einer Temperatur zwischen 60 und 150°C trocknet

   e. man den in Stufe d. erhaltenen Feststoff bei einer Temperatur zwischen 150 und 800°C kalziniert.

12. Verfahren zu Herstellung eines Katalysators nach Anspruch 11, derart, dass man außer bei Stufe b. wenigstens ein Element, gewählt unter Phosphor den Elementen der Gruppe VIIA und den Elementen der Gruppe VIII einführt.

13. Verfahren zu Herstellung eines Katalysators nach einem der Ansprüche 11 bis 12, bei dem man zu einer Kalzinierung und einem Trocknen zwischen jeder Imprägnierungsstufe eines Elements übergeht.

14. Verwendung eines Katalysators nach einem der Ansprüche 1 bis 10 oder hergestellt nach einem der Ansprüche 11 bis 12 in einem Hydriercrackverfahren von Kohlenwasserstoffbeschickungen.

15. Verwendung nach Anspruch 14, derart, dass die Beschickung aus wenigstens 80 Vol.-% von Verbindungen besteht, deren Siedepunkte wenigstens 350°C sind.

16. Verwendung nach einem der Ansprüche 14 bis 15, derart, dass die Temperatur über 200°C liegt, unter einem Druck über 0,1 MPa mit einem Wasserstoffrezyklierungsgrad über 50 Normalliter Wasserstoff pro Liter Beschickung bei einer vvh zwischen 0,1 und 20 h$^{-1}$.

17. Verwendung nach einem der Ansprüche 14 bis 16 in einem Teilhydriercrackverfahren mit einem Umwandlungsniveau unter 55%.

18. Verwendung nach Anspruch 17, derart, dass die Temperatur über 230°C liegt, unter einem Druck über 2 MPa mit einem Wasserstoffrezyklierungsgrad über 100 Normalliter Wasserstoff pro Liter Beschickung bei einer vvh zwischen 0,1 und 10 h$^{-1}$.

19. Verwendung nach einem der Ansprüche 14 bis 16 in einem Hydriercrackverfahren mit einem Umwandlungsniveau über 55%.

20. Verwendung nach Anspruch 19, derart, dass die Temperatur größer oder gleich 230°C ist, unter einem Druck über 5 MPa mit einer Wasserstoffmenge über 100 Normalliter Wasserstoff pro Liter Beschickung bei einer vvh zwischen 0,15 und 10 h$^{-1}$.

21. Verwendung nach einem der Ansprüche 14 bis 20, bei der man eine Hydrotreatment-Vorbehandlungsstufe bei einer Temperatur zwischen 350 und 460°C, unter einem Gesamtdruck von wenigstens 3 MPa mit einer Wasserstoffmenge von über 100Nl Wasserstoff pro Liter Beschickung, mit einer stündlichen Volumengeschwindigkeit zwischen 0,1 und 5 h$^{-1}$ mit und in Gegenwart eines Hydrotreatmentkatalysators durchführt.

**Claims**

1. A catalyst comprising a support containing at least one matrix and at least one zeolite selected from the group formed by NU-85, NU-86 and NU-87 zeolite, said catalyst further comprising at least one metal selected from the group formed by metals from groups VIB and group VIII of the periodic table, said catalyst being **characterized in that** it comprises, as a promoter, at least one element selected from the group formed by silicon and boron.

2. A catalyst to claim 1 comprising a NU-85 zeolite.

3. A catalyst to claim 1 comprising a NU-86 zeolite.

4. A catalyst to claim 1 comprising a NU-87 zeolite.

5. A catalyst according to any one of claim 1 to 4, **characterized in that** it further contains phosphorous.

6. A catalyst according to claim 1 to claim 5, **characterized in that** it further comprises at least one element selected from group VIIA of the periodic table.

7. A catalyst according to any one of claims 1 to 6, **characterized in that** it further comprises at least one element selected from group VIIB of the periodic table.

8. A catalyst according to any one of claims 1 to 7, **characterized in that** the silicon is introduced in its amorphous form.

9. A catalyst according to any one of claims 1 to 8, in which the zeolite is in its hydrogen form.

10. A catalyst according to any one of claims 1 to 9, comprising, by weight with respect to the catalyst:

- 0.1% to 60% of at least one metal selected from the group formed by group VIB and group VIII metals;
- 0.1% to 90% of at least one zeolite selected from NU-85, NU-86 and NU-87 zeolite;
- 0.1% to 99% of at least one amorphous or low crystallinity mineral matrix;
- 0.1% to 20% of at least one promoter element selected from the group formed by boron and silicon;
- 0 to 20% of phosphorous;
- 0 to 20% of at least one element selected from group VIIA;
- 0 to 20% of at least one element selected from group VIIB.

11. A process for preparing a catalyst according to any one of claims 1 to 10, in which the following steps are carried out:

a) drying and weighing a solid termed the precursor, comprising at least the following compounds: at least one matrix, a zeolite selected from the group formed by NU-85, NU-86 and NU-87 zeolites, at least one element selected from the group formed by group VIB and group VIII metals, the whole preferably being formed;
b) impregnating the solid precursor defined in step a) using at least one aqueous solution containing at least one element selected from boron and silicon;
c) leaving the moist solid obtained from step b) in a moist atmosphere at a temperature in the range 10°C to 80°C;
d) drying the moist solid obtained in step c) at a temperature in the range 60°C to 150°C;
e) calcining the solid obtained from step d) at a temperature in the range 150°C to 800°C.

12. A process for preparing a catalyst according to claim 11, in which in step b), at least one element selected from phosphorous, group VIIA elements and group VIIB elements is also introduced.

13. A process for preparing a catalyst according to claim 11 or claim 12, in which a calcining and a drying step are carried out between each element impregnation step.

14. Use of a catalyst according to any one of claims 1 to 10 or prepared according to any one of claims 11 to 13, in a process for hydrocracking hydrocarbon feeds.

15. Use according to claim 14, in which the feed is constituted by at least 80% by volume of compounds with a boiling point of at least 350°C.

16. Use according to claim 14 or claim 15, in which the temperature is over 200°C, the pressure is over 0.1 MPa, with a hydrogen recycle ratio of over 50 normal litres of hydrogen per litre of feed, and the HSV is in the range 0.1 to 20 h$^{-1}$.

17. Use according to any one of claims 14 to 16, in a partial hydrocracking process, with a degree of conversion of less than 55%.

18. Use according to claim 17, in which the temperature is 230°C or more, the pressure is over 2 MPa, the quantity of hydrogen is over 100 normal litres of hydrogen per litre of feed and the hourly space velocity is in the range 0.1 to 10 h$^{-1}$.

19. Use according to any one of claims 14 to 16, in a hydrocracking process with a degree of conversion of over 55%.

20. Use according to claim 19, in which the temperature is 230°C or more, the pressure is over 5 MPa, the quantity of hydrogen is over 100 normal litres of hydrogen per litre of feed and the hourly space velocity is in the range 0.15 to 10 h$^{-1}$.

21. Use according to any one of claims 14 to 20, in which a prior hydrotreatment step is carried out at a temperature in the range 350°C to 460°C, at a pressure of over 3 MPa, with a quantity of hydrogen of over 100 normal litres of hydrogen per litre of feed, with an hourly space velocity in the range 0.1 to 5 h$^{-1}$ and in the presence of a hydrotreatment catalyst.